# FASCICULE DE BREVET EUROPEEN

(11) **EP 1 933 528 B1**
(45) Date de publication et mention de la délivrance du brevet: **26.04.2017**
(21) Numéro de dépôt: 07122786.2
(22) Date de dépôt: 10.12.2007
(51) Int. Cl.: H04W 12/06, H04L 29/06

(54) **Sécurisation d'accès à des services depuis un équipement communicant avec une entité personnelle**
Sicherer Dienstezugriff von einem Kommunikationsgerät mit einer persönlichen Vorrichtung
Secure service access from a communication apparatus with a personal device

(30) Priorité: 12.12.2006 FR 0655455
(43) Date de publication de la demande: 18.06.2008
(73) Titulaire: Orange, 75015 Paris (FR)
(72) Inventeur: Picquenot, David, 14280, SAINT CONTEST (FR); Camus, Sylvie, 91120, PALAISEAU (FR); Bailloux, Sandrine, 14210, NOYERS-BOCAGE (FR)
(74) Mandataire: Regimbeau

(56) Documents cités:
- EP-A- 1 480 411
- EP-A- 1 608 123
- WO-A-2004/032557
- R. CRICCO: "Enhance your mobile services for Java handsets by using the SIM card" GEMPLUS, [Online] 21 décembre 2005 (2005-12-21), XP002428139 Extrait de l'Internet: URL:http://web.archive.org/web/20051221080 614/http://www.javamedeveloper.com/downloa ds/gemplus/JSR177_ceo_v3.pdf> [extrait le 2007-04-04]
- ARMAND NACHEF: "J2ME - JSR 177" SIMAGINE UNIVERSITY, [Online] 24 août 2005 (2005-08-24), XP002428140 Extrait de l'Internet: URL:http://www.simagine.axalto.com/summer2 006pdf/SIMagine_JSR177-presentation2.pdf> [extrait le 2007-04-04]
- INTERNATIONAL STANDARD: ISO/IEC 7816-8, 6 janvier 2004 (2004-01-06), XP008077623

## Description

La présente invention concerne l'accès sécurisé à des services personnalisés, qu'ils soient de proximité ou distants, depuis un équipement communicant tel qu'un assistant numérique personnel PDA ou un "Smartphone", pouvant interroger une petite entité personnelle du type carte à puce.

L'entité personnelle contient en mémoire des données privées propres à un utilisateur et utiles pour accéder aux services personnalisés. Ces données sont par exemple des clés, certificats, codes d'authentification, mots de passe et codes personnels comme un code PIN ("Personal Identity Number" en anglais).

Un service personnalisé peut être un accès à un réseau privé virtuel VPN ("Virtual Private Network" en anglais) pour une connexion sécurisée de l'équipement communicant au réseau privé d'une entreprise, une authentification de l'utilisateur-client possédant la carte à puce auprès de serveurs sécurisés comme un serveur bancaire, ou une messagerie sécurisée pour l'envoi et la réception de courriels signés et/ou chiffrés.

Actuellement pour stocker des données privées utiles servant à sécuriser l'accès à des services personnalisés depuis un équipement communicant tel qu'un assistant numérique personnel, une carte à puce en tant que ressource cryptographique est logée dans un lecteur connecté au port à bus série universel USB (en anglais "Universal Serial Bus") ou série de l'équipement communicant. Le lecteur se présente sous forme d'un lecteur de carte ISO, ou bien d'un dongle, la carte et le lecteur formant alors un seul objet. La carte peut comprendre un crypto-processeur.

Ainsi pour bénéficier de fonctions de sécurité, l'utilisateur de l'équipement communicant doit acquérir un matériel supplémentaire amovible encombrant, le lecteur de carte et la carte séparés ou intégrés ensemble.

Le procédé de l'invention pour sécuriser des données dans un équipement communicant associé à une entité personnelle telle qu'une carte à puce, vise à pallier les inconvénients ci-dessus lorsque l'équipement communicant comprend de manière connue une interface de réseau apte à recevoir une commande d'un premier type encapsulée dans une commande d'un deuxième type transmise par un moyen externe à l'équipement communicant, sans que l'équipement communicant interprète la commande du premier type. Par exemple, selon la demande de brevet EP 1 608 123, une passerelle dans un terminal mobile convertit des paquets transmis par un serveur distant selon le protocole TCP/IP dans lesquels des messages HTTP sont insérés en des commandes selon le protocole BIP pour retransmettre les messages HTTP à une carte à puce.

Le procédé de l'invention est tel que caractérisé dans la revendication 1.

L'invention recourt à l'entité personnelle du type carte universelle à circuit amovible logée à l'origine dans l'équipement communicant, sans ajouter de matériel supplémentaire, c'est-à-dire en maintenant l'encombrement initial de l'équipement communicant. Dans l'entité personnelle peut être prévu un moyen de cryptographie constituant un moyen sécuritaire pour exécuter toute action cryptographique sur les données à sécuriser, comme un chiffrement ou une écriture.

Les premières commandes incluant les données sont établies par l'équipement communicant avantageusement au format connu de commandes, telles que des commandes "ENVELOPE", qui sont transmises selon la technique antérieure par des moyens externes à l'équipement communicant, tels que serveurs, à travers un réseau radio cellulaire et qui sont aptes à être interprétées par une application de gestion de ressources personnelles, par exemple SIM ou USIM, adaptée au réseau cellulaire dans l'entité personnelle. Les premières commandes établies dans l'équipement communicant ne modifient pas ainsi la réception de commande dans l'entité personnelle.

L'encapsulation de la première commande établie et la décapsulation de la deuxième commande compatible avec l'interface de réseau de l'équipement communicant facilitent l'accès direct d'un moyen de sécurité dans l'équipement communicant au moyen de cryptographie dans l'entité personnelle, sans recourir à un lecteur de carte supplémentaire.

Une adresse du moyen de cryptographie dans lequel l'action est exécutée est introduite dans chaque première commande établie dans l'équipement communicant ce qui permet au moyen de cryptographie dans l'entité personnelle de recevoir directement les premières commandes et exécuter des premières commandes du premier type qui lui sont destinées sans faire intervenir l'application de gestion de ressources personnelles.

L'invention est également relative à un équipement communicant tel que défini dans la revendication 6, et à un système comprenant une entité personnelle, telle qu'une carte à puce, et un équipement communicant pour sécuriser des données, comme défini dans la revendication 7.

Enfin l'invention se rapporte à un programme d'ordinateur apte à être mis en oeuvre dans l'équipement communicant, comme défini dans la revendication 8.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans desquels :
- la figure 1 est un bloc-diagramme schématique d'un équipement communicant et d'une entité personnelle associés selon l'invention ;
- la figure 2 montre schématiquement une architecture matérielle pour l'équipement communicant et l'entité personnelle ;
- la figure 3 est un algorithme du procédé selon l'invention pour sécuriser un courriel à transmettre par l'équipement communicant ; et
- la figure 4 est un algorithme du procédé selon l'invention pour sécuriser l'écriture d'une clé privée depuis l'équipement communicant.

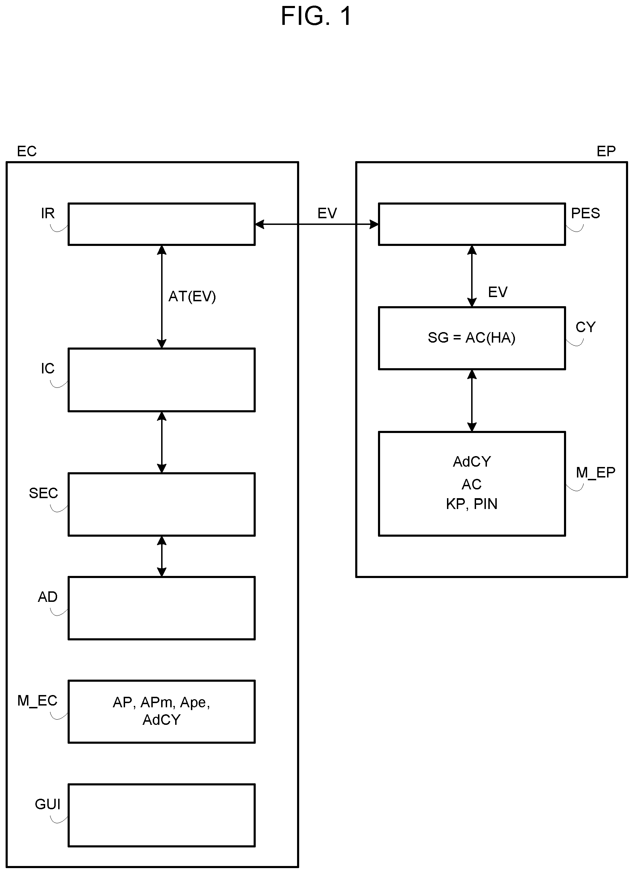

En référence à la figure 1, un équipement communicant EC peut être un assistant numérique personnel communicant mobile PDA, ou un "Smartphone". Une entité personnelle EP peut être une carte à puce logée avec ou sans contact dans l'équipement communicant.

Par exemple lorsqu'une application de service cliente AP dans l'équipement communicant EC est activée par l'utilisateur de l'entité personnelle EP, l'application ouvre un canal de communication avec un serveur de service à travers un réseau de télécommunications. Le serveur de service peut être un serveur de messagerie électronique ou un serveur de réseau local d'entreprise. Préalablement selon l'invention, l'application AP recourt à des ressources sécurisées et des données privées dans l'entité personnelle EP afin que l'entité personnelle EP fournisse une signature identifiant l'utilisateur à l'application qui l'introduit ensuite dans une requête transmise au serveur de service.

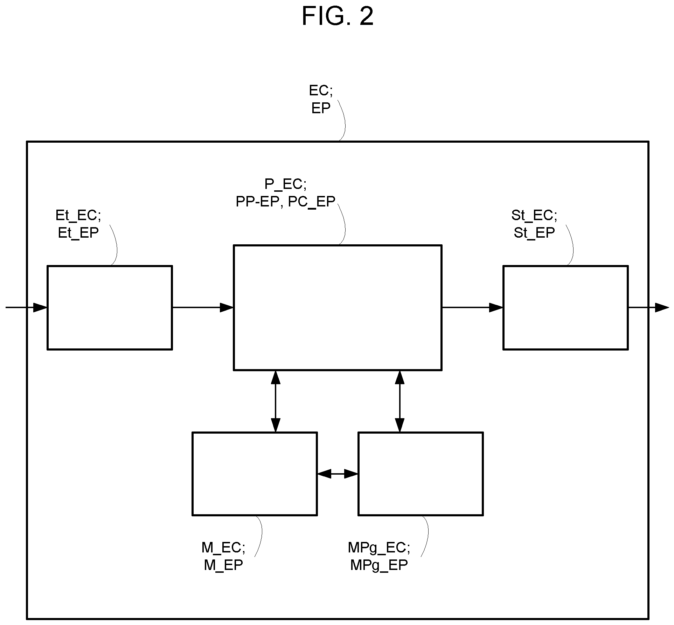

Dans la figure 2, on a représenté une architecture matérielle pour l'équipement communicant EC et l'entité personnelle EP. L'architecture comprend une mémoire M, une unité de traitement P équipée par exemple d'un ou de plusieurs microprocesseurs et pilotés par des programmes d'ordinateur mémorisés dans une mémoire MPg mettant en oeuvre le procédé selon l'invention. Un module d'entrée Et et un module de sortie St sont respectivement disposés en entrée et en sortie de l'unité de traitement P.

Afin d'éviter toute confusion, chaque élément de l'architecture de l'équipement communicant EC et l'entité personnelle EP est désigné ci-après en combinaison avec le repère de l'ensemble EC, EP auquel il appartient. Ainsi l'équipement communicant EC comprend un processeur P_EC, une mémoire M_EC, une mémoire de programme MPg_EC, un module d'entrée Et_EC et un module de sortie St_EC. L'entité personnelle EP comprend un processeur principal PP_EP et un processeur de cryptographie PC_EP, une mémoire M_EP, une mémoire de programme MPg_EP, un module d'entrée Et_EP et un module de sortie St_EP.

Dans la figure 1, l'équipement communicant EC et l'entité personnelle EP sont représentés sous forme de blocs fonctionnels dont la plupart assurent des fonctions ayant un lien avec l'invention et peuvent correspondre à des modules logiciels et/ou matériels.

L'équipement communicant EC comprend une interface graphique d'utilisateur GUI pour clavier et écran, une unité d'administration d'entité personnelle AD, une unité de sécurité SEC, une interface de communication IC notamment pour formater des commandes destinées à l'entité personnelle EP et une interface de réseau radio IR pour communiquer avec un réseau de communication et l'entité personnelle EP.

Les unités AD et SEC et l'interface de communication IC sont implémentées dans la mémoire de programme MPg_EC. La mémoire de programme MPg_EC contient un système d'exploitation et un environnement d'exécution comme par exemple une machine virtuelle pouvant être compatible avec le langage JAVA. La machine virtuelle est en relation avec une machine virtuelle JAVA implémentée dans l'entité personnelle EP à travers un protocole de communication spécifique, notamment pour activer des applications clientes installées dans l'équipement communicant EC et une unité de cryptographie CY de l'entité EP lors de l'exécution de fonctions cryptographiques.

La mémoire M_EC comporte notamment une ou plusieurs applications clientes AP, telles qu'une application de courrier électronique (courriel) APm, une application d'écriture de données APe, un navigateur, une application de communication avec un réseau local par exemple par liaison sans fil de type infrarouge, ou Bluetooth, ou 802.xx, ou satisfaisant le label WiFi (Wireless Fidelity), ou une application de communication avec l'internet pour transaction sécurisée par exemple selon le procédé de cryptographie à clé publique et couches sécurisées SSL ("Secure Sockets Layers" en anglais).

L'unité d'administration AD administre l'entité personnelle EP et supervise le téléchargement et la personnalisation de l'unité de cryptographie CY dans l'entité personnelle depuis le réseau, tel qu'un réseau cellulaire numérique, auquel est attaché l'équipement communicant. L'unité AD sert également à importer des clés et certificats d'utilisateur à un format prédéfini, tel qu'un format cryptographique PKCS12 ("Public-Key Cryptography Standards" en anglais), et à modifier par exemple un code personnel PIN de l'utilisateur possédant l'entité personnelle.

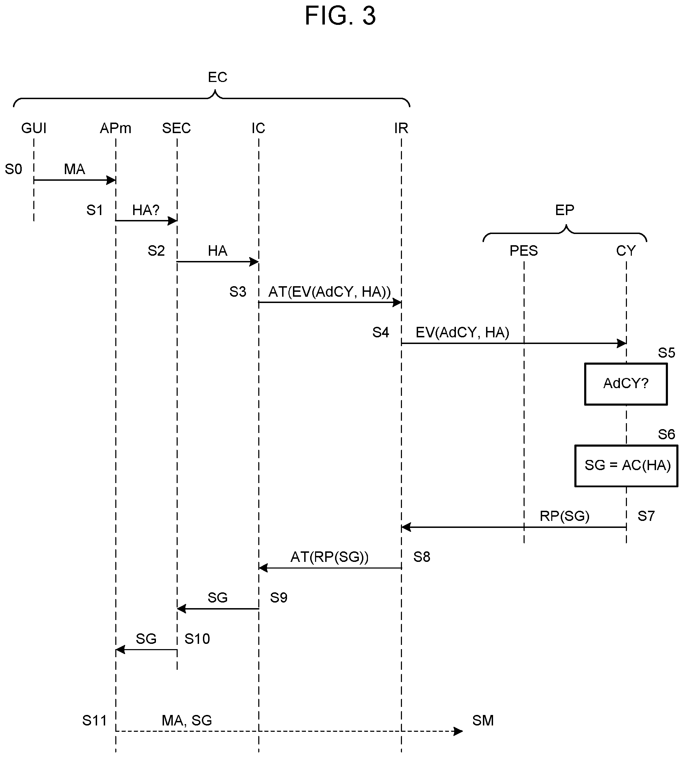

L'unité de sécurité SEC fournit des fonctionnalités cryptographiques aux applications clientes AP en faisant intervenir l'unité de cryptographie CY dans l'entité personnelle EP à la demande de toute application cliente en matière de sécurisation de données. Par exemple, l'unité SEC en coopération avec l'unité de cryptographie CY intervient pour authentifier l'utilisateur par un réseau local d'entreprise à la demande d'une application cliente pour réseau privé virtuel VPN ("Virtual Private Network" en anglais), pour signer des données dans des courriels et/ou chiffrer de s courriels ou pour vérifier une signature reçue ou des données comme un code personnel ou un mot de passe et/ou déchiffrer des données chiffrées reçues à la demande d'une application de courrier électronique, ou pour naviguer dans des sites internet sécurisés selon le procédé SSL à la demande du navigateur, ou bien encore pour générer des bi-clés, c'est-à-dire des paires de clé de chiffrement et déchiffrement, à la demande d'une application d'échange de messages avec un autre équipement communicant par exemple. Comme on le verra en référence à la figure 3, une signature de données peut comprendre un hachage de données en une empreinte effectuée par l'unité de sécurité SEC.

L'unité de sécurité SEC comprend une librairie de petits programmes faisant office d'interface de type API ("Application Programming interface" en anglais) avec les applications clientes pour la cryptographie et avec le système d'exploitation du processeur P_EC.

L'interface de réseau radio IR fait office de modem et est fonctionnellement liée aux modules Et_EC et St_EC montrés à la figure 2 et reliés par exemple à travers une liaison série à un port d'entrée et de sortie PES de l'entité personnelle EP représentatif des modules Et_EP et St_EP.

L'interface de communication IC permet à l'unité de sécurité SEC de communiquer avec l'unité de cryptographie CY dans l'entité personnelle EP par l'intermédiaire de premières commandes EV à travers l'interface de réseau radio IR et la liaison série et avec l'interface de réseau radio IR par l'intermédiaire de deuxièmes commandes AT. Les commandes AT sont formatées dans l'équipement communicant EC comme des commandes connues relatives à des messages entre l'équipement communicant et un réseau de communication par liaison radio.

Les premières commandes EV sont au format des commandes "ENVELOPE" utilisées classiquement pour accéder depuis une entité externe, comme un serveur, à travers l'équipement communicant EC transparent au système d'exploitation dans l'entité personnelle EP. Les commandes EV sont relatives à un jeu de commandes et réponses constituant des unités de données de protocole applicatif APDU ("Application Protocol Data Unit" en anglais) pré-formatées selon un protocole de communication asynchrone à l'alternat spécifique entre un terminal mobile et une carte à puce, désigné par exemple par SIM Application Toolkit (SAT) selon la norme ISO 7816-3/8 ou la recommandation 3GPP TS 51.014 ou ETSI 123.048. Les commandes sont toujours déclenchées à l'initiative de l'équipement communicant EC. L'entité personnelle EP est pro-active afin d'initier des actions qui lui sont propres mais après interrogation de l'équipement communicant.

Selon la technique antérieure, les commandes "ENVELOPE" sont aptes à transférer des données d'un moyen externe à l'équipement communicant, comme un serveur, à l'entité personnelle EP sans que l'équipement communicant EC les interprète. En revanche, les commandes EV selon l'invention sont établies à l'initiative de l'unité de sécurité SEC dans l'interface de communication IC de l'équipement communicant EC et sont aussi interprétables par la machine virtuelle implémentée dans l'entité personnelle EP, de manière analogue à un message court encapsulé reçu par l'équipement communicant selon la technique antérieure et transmettant directement à l'entité personnelle une commande de chargement de message court du type "ENVELOPE (SMS-PP DOWNLOAD)".

Les commandes "ENVELOPE" EV servent à ce qu'une application cliente AP accède à des données ou commande l'exécution de l'une des applications, dites applets, localisées dans l'entité personnelle EP et plus particulièrement accède à l'unité de cryptographie CY. L'entité personnelle EP n'est pas vue classiquement comme une carte à puce par les applications clientes AP qui ne voit que l'interface de réseau IR, comme un modem, à laquelle l'entité personnelle EP est associée.

Les deuxièmes commandes AT peuvent encapsuler chacune une commande EV "ENVELOPE" et sont compatibles avec l'interface de réseau radio IR. Pour établir et gérer des commandes et réponses asynchrones AT, l'interface de communication IC comprend une interface par exemple du type RIL ("Radio Interface Layer" en anglais) qui est supportée par les couches supérieures comprenant l'unité de sécurité SEC et l'unité de cryptographie CY relatives aux commandes "ENVELOPE" EV. Ainsi selon l'invention, l'interface de communication IC encapsule une commande EV dans une commande AT sous la forme :
"RIL_SendSimToolkitEnvelopeCmd",
afin de déclencher une applet (cardlet) dans l'entité personnelle, comme l'unité de cryptographie CY.

Les commandes AT sont désencapsulées en commandes "ENVELOPE" par l'interface de réseau IR qui les transmet directement à l'entité personnelle EP sans passer par l'intermédiaire d'un lecteur de carte supplémentaire.

L'entité personnelle EP est par exemple une carte à puce du type carte universelle à circuit intégré UICC ("Universal Integrated Circuit Card"). La mémoire de programme MPg_EP comprend notamment une application SIM (Subscriber Identity Module) pour que l'équipement communicant EC fonctionne comme un mobile du type GSM ou GPRS, et/ou une application USIM (Universal Subscriber Identity Module) pour que l'équipement communicant EC fonctionne en accès multiple à répartition par codes CDMA ("Coded Division Multiple Access" en anglais) de la troisième génération (3GPP) du type UMTS ("Universal Mobile Telecommunications System" en anglais) ou UTRAN (UMTS Terrestrial Radio Access Network).

La mémoire de programme MPg_EP inclut en outre un système d'exploitation pour la carte qui s'appuie sur une machine virtuelle du type "Java Card".

La mémoire M_EP peut notamment mémoriser des caractéristiques du profil de l'utilisateur et des numéros d'appel dans un annuaire.

Comme représenté à la figure 1, l'entité personnelle EP comprend, outre un système d'exploitation et une machine virtuelle de type "Java Card" s'exécutant dans les processeurs PP_EP et PC_EP, l'unité de cryptographie CY sous forme d'une applet qui s'appuie sur le processeur de cryptographie PC_EP relié avec le processeur principal PP_EP au port d'entrée et de sortie PES.

L'unité de cryptographie CY est adressable par une adresse AdCY préenregistrée dans la mémoire M_EP. Elle supporte des opérations à clés privées ainsi que la gestion et le stockage de certificats, de clés privés et de codes personnels PIN dans la mémoire M_EP et la génération de bi-clés. Par exemple, des algorithmes de chiffrement/déchiffrement connus sont implémentés dans l'unité de cryptographie CY qui exécute des actions de cryptographie pour participer à la sécurisation d'une authentification d'utilisateur pour une communication avec un réseau local d'entreprise, la signature et le chiffrement de données et de courriels, la vérification de signature et le déchiffrement de données et de courriels, et de communications selon le procédé SSL, sans qu'aucune clé privée ne soit extraite de l'entité EP.

Pour l'exécution de ces opérations, l'unité de cryptographie CY reçoit directement des commandes "ENVELOPE" EV par le port d'entrée et de sortie PES, sans l'intermédiaire du processeur principal PP_EP, et reconnaît les commandes EV qui incluent son adresse AdCY, les acquitte auprès de l'unité de sécurité SEC et exécute des actions de cryptographie demandées dans les commandes EV.

En référence à la figure 3, un courriel MA ("email") établi par l'utilisateur au moyen de l'interface graphique d'utilisateur GUI de l'équipement communicant EC est signé dans l'entité personnelle EP au cours d'étapes S0 à S11 selon le procédé de sécurisation de l'invention, par exemple après une saisie d'un code personnel PIN de l'utilisateur et une vérification de celui-ci par l'entité personnelle.

Après qu'à l'étape S0, le courriel MA soit établi au moyen de l'interface graphique d'utilisateur GUI et enregistré au moyen d'une application de messagerie électronique APm installée dans l'équipement communicant EC, l'application APm demande la détermination d'une empreinte de hachage HA à l'unité de sécurité SEC à l'étape S1. L'unité de sécurité produit l'empreinte de hachage HA et la fournit à l'interface de communication IC à l'étape S2.

L'interface de communication IC établit une première commande "ENVELOPE" EV du type "SendAPDU(COMPUTE_SIGNATURE(hash))" et y introduit en adresse l'adresse AdCY de l'unité de cryptographie CY dans l'entité personnelle EP et en données l'empreinte HA, à l'étape S3. La commande EV(AdCY, HA) ainsi constituée est encapsulée dans une commande AT compatible avec l'interface de réseau radio IR et ainsi notifiée par l'interface de communication à l'entité personnelle EP. L'interface de réseau radio IR analyse la commande AT et reconnaît dans celle-ci une commande EV de manière à décapsuler la commande AT et à transmettre la commande EV(AdCY, HA) aux processeurs de l'entité personnelle EP à travers le port PES, à l'étape S4.

Dans l'entité personnelle EP, l'unité de cryptographie CY reçoit ainsi la commande "ENVELOPE" EV (AdCY, HA) produite par l'équipement communicant EC, comme si la commande "ENVELOPE" avait été établie par une entité externe qui peut être un serveur d'un réseau de communication auquel est relié l'équipement EC qui est transparent aux commandes ENVELOPE selon la technique antérieure.

A l'étape S5, l'unité de cryptographie CY dans l'entité personnelle EP compare l'adresse AdCY dans la commande EV (AdCY, HA) à son adresse préenregistrée dans la mémoire M_EP et reconnaît ainsi que la commande ENVELOPE lui est destinée. Si les adresses comparées sont différentes, l'unité de cryptographie CY peut émettre une réponse de type "Status" propre à une erreur pouvant inviter l'application AP à renouveler sa demande de signature de courriel. Ainsi des commandes ENVELOPE peuvent être traitées de manière connue par l'application SIM ou USIM, mais aussi selon l'invention des commandes ENVELOPE spécifiques incluant l'adresse AdCY peuvent être adressées directement et traitées par l'unité de cryptographie CY en tant qu'applet.

L'unité de cryptographie CY extrait ensuite l'empreinte de hachage HA de la commande EV(AdCY, HA) à l'étape S6 et lui applique un algorithme de chiffrement AC à clé privée pour produire une signature SG du courriel MA. L'unité de cryptographie CY insère la signature SG dans une réponse RP par exemple comme définie selon la norme ISO 7816-3 et la fournit à l'interface de réseau IR à l'étape S7. L'interface IR encapsule la signature SG dans une réponse AT et transmet la réponse AT(RP(SG)) à l'interface de communication IC à l'étape S8.

Dans l'équipement communicant EC, l'interface de communication IC désencapsule la réponse AT(RP(SG)) en la réponse RP(SG), extrait la signature SG de la réponse RP(SG) et fournit la signature à l'unité de sécurité SEC à l'étape S10. L'unité de sécurité SEC mémorise la signature SG et la communique à l'application de messagerie électronique APm à l'étape S10. L'application APm complète le courriel MA en l'associant à la signature SG et commande la transmission d'un message via les interfaces IC et IR de l'équipement communicant EC à un serveur de messagerie SM auquel l'utilisateur a destiné le message.

Le procédé de sécurisation selon l'invention présente l'avantage de pouvoir utiliser l'entité personnelle EP, telle qu'une carte à puce du type carte universelle à circuit intégré UICC incluant une application SIM ou USIM, comme élément de sécurité en relation avec des applications natives de l'équipement communicant EC utilisant des clés et/ou certificats stockés de manière logicielle.

Sans impact sur les logiciels existants, le procédé de sécurisation permet l'utilisation de clés et/ou certificats et de fonctions de génération de bi-clés et de certificats sur l'entité personnelle alors que lesdits logiciels ne le prévoient pas nativement.

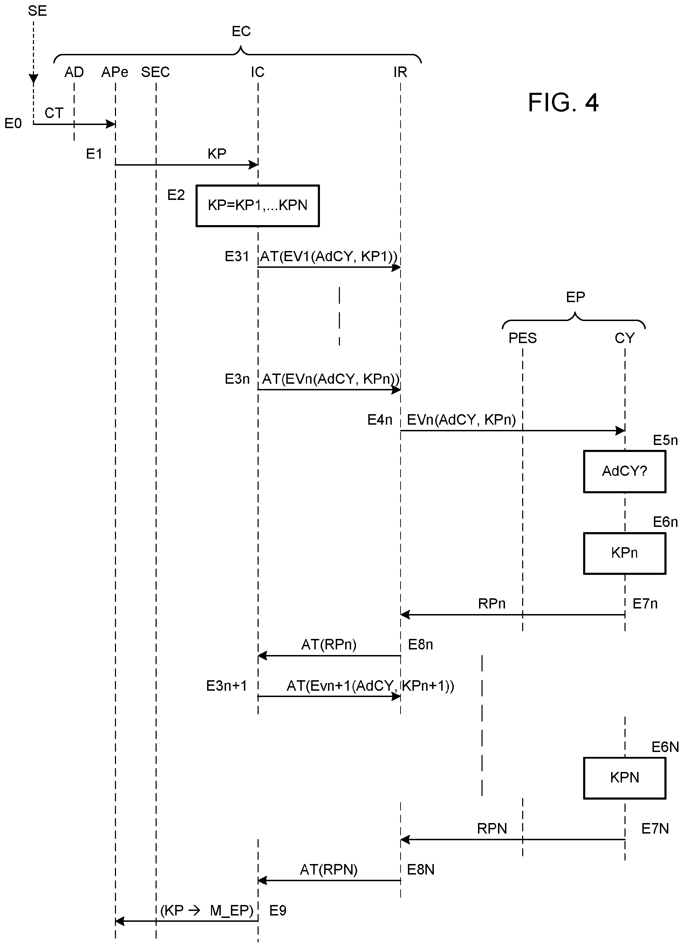

Selon un autre exemple montré à la figure 4, l'unité de sécurité SEC et l'unité de cryptographie CY coopèrent pour écrire une clé privée KP dans une zone sécurisée de la mémoire M_EP de l'entité personnelle EP accessible seulement par l'unité de cryptographie. Dans cet exemple, la clé privée KP est supposée avoir une taille excédant la longueur maximale du champ de données d'une commande "ENVELOPE". Par exemple pour transmettre la clé privée KP, il est nécessaire de la segmenter dans les champs de données de N commandes "ENVELOPE" EV1 à EVN, l'entier N pouvant être supérieur à 5.

L'écriture de clé privée comprend des étapes d'étapes E0 à E9.

Initialement à l'étape E0, par exemple un serveur SE géré par l'opérateur de réseau cellulaire pour mobiles auquel l'équipement communicant EC est rattaché doit télécharger une application dans l'entité personnelle. Le serveur est un serveur de transport sécurisé du type HTTPS ("HyperText Transfer Protocol Secured" en anglais) et requiert la saisie d'un mot de passe par l'utilisateur dans l'équipement communicant EC pour écrire une clé privée KP associée à l'application à télécharger. Après vérification du mot de passe reçu par le serveur, celui-ci transmet à l'équipement communicant EC un certificat CT associé à la clé privée KP. A l'étape E1, l'unité d'administration AD appelle une application d'écriture APe qui demande l'écriture de la clé privée KP et du certificat précédemment importés du serveur SE à l'unité de sécurité SEC qui formule cette demande à l'interface de communication IC.

A l'étape E2, dans l'interface de communication IC, la clé privée KP est segmentée en N portions KP1 à KPN qui sont à introduire dans des commandes successives "ENVELOPE" EV1 à EVN. La première commande EV1 contient la longueur attendue de la clé privée KP exprimée en octets. Chaque commande EVn, avec 1 ≤ n ≤ N, comprend l'adresse AdCY de l'unité de cryptographie CY et un champ de données complètement remplie par la portion respective KPn de la clé privée KP ayant la longueur maximale de champ de données, à l'exception le plus souvent de la dernière commande EVN dont le champ de données est partiellement rempli par la portion finale KPN de la clé.

Pour chaque commande EVn à notifier à l'unité de cryptographie CY, un cycle d'étapes E3n à E8n est exécuté entre l'interface de communication IC dans l'équipement communicant EC et l'unité de cryptographie CY dans l'entité personnelle EP.

A l'étape E3n, l'interface de communication IC établit la commande EVn(AdCY, KPn) et l'encapsule dans une commande AT qui est fournie à l'interface de réseau radio IR. L'interface de réseau radio IR analyse la commande AT(EVn(AdCY, KPn)) et reconnaît dans celle-ci une commande EV de manière à décapsuler la commande AT et à transmettre la commande EVn(AdCY, KPn) aux processeurs de l'entité personnelle EP à travers le port PES, à l'étape E4n.

A l'étape E5n, l'unité de cryptographie CY reconnaît que la commande EVn(AdCY, KPn) lui est destinée en comparant l'adresse AdCY dans la commande EVn(AdCY, KPn) à son adresse dans la mémoire M_EP. L'unité de cryptographie CY extrait ensuite la portion de clé privée KPn de la commande EVn à l'étape E6n et l'écrit dans la mémoire M_EP. Puis l'unité de cryptographie CY acquitte cette écriture de la portion de clé privée KPn en retournant une réponse RPn de type "Status" à l'interface de réseau IR à l'étape E7n. L'interface de réseau encapsule la réponse RPn dans une réponse AT et transmet la réponse AT(RPn) à l'interface de communication IC à l'étape E8n. L'interface de communication IC désencapsule la réponse AT(RPn) en la réponse RPn(Status) et initie alors le cycle suivant d'étapes E3n+1 à E8n+1 d'une manière analogue au cycle précédent d'étapes E3n à E8n.

Dans le dernier cycle d'étapes E3N à E8N, lorsque la dernière portion KPN de la clé privée KP extraite de la commande EVN est écrite dans la mémoire M_EP à l'étape E6N, l'unité de cryptographie CY acquitte l'écriture complète de la clé privée KP en retournant une réponse RPN de type "Status" propre à une "fin d'enregistrement" à l'interface de communication IC via l'interface de réseau IR, à des étapes E7N et E8N. L'interface de communication IC confirme alors l'écriture de clé privée KP dans l'entité personnelle EP à l'unité de sécurité SEC et l'application d'écriture Ape, à l'étape E9.

Suivant l'autre direction de l'entité personnelle EP vers équipement communicant EC, si des données lues par l'unité de cryptographie CY et à transmettre à l'équipement communicant EC ont une longueur supérieure à la longueur maximale du champ de données d'une réponse RP, les données de réponse lues sont segmentées dans l'unité de cryptographie CY en des portions de données respectivement incluses dans des réponses successives RP. Chaque réponse RP est envoyée par l'unité de cryptographie CY via l'interface de réseau IR et un encapsulage en réponse AT (RP) à l'interface de communication IC, à la suite d'une commande de requête de portion de données du type "GET RESPONSE" transmise par l'interface de communication IC. Dans l'interface de communication IC, les portions de données sont extraites des réponses RP et sont concaténées.

Selon un autre exemple, lors d'une étape préalable, l'équipement communicant EC, tel qu'un assistant numérique personnel communicant mobile PDA, établit une communication avec un serveur distant OTP ("One Time Password" en anglais) pour obtenir un ou plusieurs mots de passe. Ces mots de passe sont des mots de passe qui ne peuvent être utilisés qu'une seule fois. Le serveur OTP calcule et transmet ces mots de passe à l'entité personnelle EP, via l'équipement communicant EC. L'entité personnelle stocke ces mots de passe dans la mémoire M_EP.

Lors d'une étape ultérieure, l'unité d'administration AD de l'équipement communicant EC appelle une application AP qui nécessite un mot de passe utilisable une seule fois. Cette application de l'équipement communicant envoie à l'entité personnelle une commande de lecture pour obtenir un mot de passe. La commande de lecture est formatée comme une commande EV transmise par un moyen externe à l'équipement communicant EC, la commande EV est encapsulée dans une commande AT compatible avec l'interface de réseau radio IR et la commande AT est décapsulée par l'interface IR, conformément à l'invention. En réponse à la commande de lecture, l'entité personnelle EP exécute une lecture du mot de passe dans la mémoire M_EP et transmet le mot de passe lu à l'équipement communicant EC.

L'invention décrite ici concerne un procédé, un équipement communicant EC tel qu'un assistant numérique personnel et une entité personnelle EP telle qu'une carte à puce associée à l'équipement communicant. Selon une implémentation, les étapes du procédé de l'invention sont déterminées par les instructions de programmes d'ordinateur incorporés respectivement dans l'équipement communicant EC et l'entité personnelle EP. Les programmes comportent des instructions de programme qui, lorsque lesdits programmes sont exécutés respectivement dans l'entité personnelle et l'équipement communicant dont le fonctionnement est alors commandé par l'exécution des programmes, réalisent les étapes du procédé selon l'invention.

En conséquence, l'invention s'applique également à des programmes d'ordinateur, notamment des programmes d'ordinateur enregistrés chacun sur ou dans un support d'informations lisible par un ordinateur et tout dispositif de traitements de données, adapté à mettre en oeuvre l'invention. Ces programmes peuvent utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker les programmes. Par exemple, le support peut comporter un moyen de stockage ou support d'enregistrement sur lequel sont enregistrés les programmes d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type internet.

Alternativement, le support d'informations peut être un circuit intégré dans lequel les programmes sont incorporés, le circuit étant adapté pour exécuter ou pour être utilisé dans l'exécution des procédés selon l'invention.

## Revendications

1. Procédé pour sécuriser des données dans un équipement communicant (EC) associé à une entité personnelle (EP) de type carte à puce, et comprenant une interface de réseau (IR) apte à recevoir une commande d'un premier type
transmise par un moyen externe à l'équipement communicant, le procédé comprend dans l'équipement communicant un établissement (S3, E3n) d'une première commande du premier type (EV, EVn) incluant les données (HA, KP) et destinée à l'entité personnelle, un encapsulage (S3, E3n) de la première commande établie (EV, EVn) dans une deuxième commande (AT) d'un deuxième type, un décapsulage (S4, E4n) de la deuxième commande en la première commande établie dans l'interface de réseau ,une transmission (S4, E4n) de la première commande depuis l'interface de réseau à l'entité personnelle (EP) et une exécution (S6, E6n) d'une action dans l'entité personnelle en fonction de la première commande.

2. Procédé conforme à la revendication 1 comprenant dans la première commande (EV, EVn) une introduction (S3, E3n) d'une adresse d'un moyen de cryptographie (CY) de l'entité personnelle dans lequel l'action est exécutée.

3. Procédé conforme à la revendication 1 ou 2, comprenant une segmentation (E2) des données (KP) en des portions de données (KPn), des premières commandes (EVn) incluant respectivement les portions de données étant établies (E3n) et transmises à l'entité personnelle (EP) successivement.

4. Procédé conforme à l'une quelconque des revendications 1 à 3, selon lequel ladite action est un chiffrement (S6) de données (HA) extraites de la commande établie (EV).

5. Procédé conforme à l'une quelconque des revendications 1 à 3, selon lequel ladite action est une écriture (E6n) de données (KP) extraites de la première commande établie (EVn) en mémoire (M_EP) de l'entité personnelle (EP).

6. Equipement communicant (EC) associé à une entité personnelle (EP) de type carte à puce pour sécuriser des données, et comprenant une interface de réseau (IR) apte à recevoir une commande d'un premier type transmise par un moyen externe à l'équipement communicant, l'équipement communicant comprend un moyen (IC) pour etablir une première commande du premier type (EV, EVn) incluant les données (HA, KP) et destinée à l'entité personnelle, et un moyen (IC) pour encapsuler la première commande établie (EV, EVn) dans une deuxième commande (AT) d'un deuxième type, et l'interface de réseau (IR) est apte à décapsuler la deuxième commande en la première commande établie et à transmettre la première commande à l'entité personnelle (EP) afin qu'une action soit entité personnelle (EP) de type carte à sécuriser des données, et comprenant une int et à transmettre la première commande à l'entité personnelle (EP) afin qu'une action soit exécutée dans l'entité personnelle en fonction de la première commande.

7. Système comprenant une entité personnelle (EP) de type carte à puce et un équipement communicant (EC) pour sécuriser des données, l'équipement communicant comprenant une interface de réseau (IR) apte à recevoir une commande d'un premier type transmise par un moyen externe à l'équipement communicant, l'équipement communicant comprend un moyen (IC) pour établir une première commande du premier type (EV, EVn) incluant les données (HA, KP) et destinée à l'entité personnelle, et un moyen (IC) pour encapsuler la première commande établie (EV, EVn) dans une deuxième commande (AT) d'un deuxième type, l'interface de réseau (IR) est apte à décapsuler la deuxième commande en la première commande établie et à transmettre la première commande à l'entité personnelle (EP) et l'entité personnelle comprend un moyen (CY) pour exécuter une action en fonction de la première commande transmise.

8. Programme d'ordinateur apte à être mis en oeuvre dans un équipement communicant (EC) associé à une entité personnelle (EP) de type carte à puce pour sécuriser des données, l'équipement communicant comprenant une interface de réseau (IR) apte à recevoir une commande d'un premier type transmise par un moyen externe à l'équipement communicant, le programme d'ordinateur comprend des instructions qui, lorsque le programme est exécuté dans ledit équipement communicant, réalisent un établissement (S3, E3n) d'une première commande du premier type (EV, EVn) incluant les données (HA, KP) et destinée à l'entité personnelle, un encapsulage (S3, E3n) de la première commande établie (EV, EVn) dans une deuxième commande (AT) d'un deuxième type, un décapsulage (S4, E4n) de la deuxième commande en la première commande établie dans l'interface de réseau, et une transmission (S4, E4n) de la première commande depuis l'interface de réseau à l'entité personnelle (EP) afin qu'une action soit exécutée dans l'entité personnelle en fonction de la commande.

## Patentansprüche

1. Verfahren zur Sicherung von Daten in einem Kommunikationsgerät (EC), das mit einer persönlichen Vorrichtung (EP) vom Typ einer Chipkarte assoziiert ist und eine Netzschnittstelle (IR) umfasst, die geeignet ist, einen Befehl eines ersten Typs zu empfangen, der von einem Mittel extern von dem Kommunikationsgerät übertragen wird, das Verfahren in dem Kommunikationsgerät umfasst: Erteilen (S3, E3n) eines ersten Befehls des ersten Typs (EV, EVn), der die Daten (HA, KP) umfasst und für die persönliche Vorrichtung bestimmt ist, Einkapseln (S3, E3n) des ersten erteilten Befehls (EV, EVn) in einen zweiten Befehl (AT) eines zweiten Typs, Entkapseln (S4, E4n) des zweiten Befehls in den ersten erteilten Befehl in der Netzschnittstelle, Übertragen (S4, E4n) des ersten Befehls von der Netzschnittstelle zur persönlichen Vorrichtung (EP) und Ausführen (S6, E6n) einer Aktion in der persönlichen Vorrichtung gemäß dem ersten Befehl.

2. Verfahren nach Anspruch 1,
umfassend ein Einführen (S3, E3n) einer Adresse eines Kryptographiemittels (CY) der persönlichen Vorrichtung in den ersten Befehl (EV, EVn), in dem die Aktion ausgeführt wird.

3. Verfahren nach Anspruch 1 oder 2,
umfassend ein Segmentieren (E2) der Daten (KP) in Datenabschnitte (KPn), wobei die ersten Befehle (EVn), die jeweils die Datenabschnitte umfassen, erteilt (E3n) und aufeinanderfolgend zur persönlichen Vorrichtung (EP) übertragen werden.

4. Verfahren nach einem der Ansprüche 1 bis 3,
wobei die Aktion eine Chiffrierung (S6) von Daten (HA) ist, die aus dem erteilten Befehl (EV) extrahiert werden.

5. Verfahren nach einem der Ansprüche 1 bis 3,
wobei die Aktion ein Schreiben (E6n) von Daten (KP), die aus dem ersten erteilten Befehl (EVn) extrahiert werden, in einen Speicher (M_EP) der persönlichen Vorrichtung (EP) ist.

6. Kommunikationsgerät (EC), welches mit einer persönlichen Vorrichtung (EP) vom Typ einer Chipkarte assoziiert ist, zur Sicherung von Daten, und umfassend eine Netzschnittstelle (IR), die geeignet ist, einen Befehl eines ersten Typs zu empfangen, der von einem Mittel extern von dem Kommunikationsgerät übertragen wird, das Kommunikationsgerät umfasst: ein Mittel (IC) zum Erteilen eines ersten Befehls des ersten Typs (EV, EVn), der die Daten (HA, KP) umfasst und für die persönliche Vorrichtung bestimmt ist, und ein Mittel (IC) zum Einkapseln des ersten erteilten Befehls (EV, EVn) in einen zweiten Befehl (AT) eines zweiten Typs, und die Netzschnittstelle (IR) geeignet ist, den zweiten Befehl in den ersten erteilten Befehl zu entkapseln, und den ersten Befehl zur persönlichen Vorrichtung (EP) zu übertragen, damit eine Aktion in der persönlichen Vorrichtung gemäß dem ersten Befehl ausgeführt wird.

7. System, umfassend eine persönliche Vorrichtung (EP) vom Typ einer Chipkarte und ein Kommunikationsgerät (EC) zur Sicherung von Daten, wobei das Kommunikationsgerät eine Netzschnittstelle (IR) umfasst, die geeignet ist, einen Befehl eines ersten Typs zu empfangen, der von einem Mittel extern von dem Kommunikationsgerät übertragen wird, das Kommunikationsgerät umfasst: ein Mittel (IC) zum Erteilen eines ersten Befehls des ersten Typs (EV, EVn), der die Daten (HA, KP) umfasst und für die persönliche Vorrichtung bestimmt ist, und ein Mittel (IC) zum Einkapseln des ersten erteilten Befehls (EV, EVn) in einen zweiten Befehl (AT) eines zweiten Typs, die Netzschnittstelle (IR) geeignet ist, den zweiten Befehl in den ersten erteilten Befehl zu entkapseln, und den ersten Befehl zur persönlichen Vorrichtung (EP) zu übertragen, und die persönliche Vorrichtung ein Mittel (CY) umfasst, um eine Aktion gemäß dem ersten übertragenen Befehl auszuführen.

8. Rechnerprogramm, welches geeignet ist, in einem Kommunikationsgerät (EC) ausgeführt zu werden, das mit einer persönlichen Vorrichtung (EP) vom Typ einer Chipkarte assoziiert ist, zur Sicherung von Daten, wobei das Kommunikationsgerät eine Netzschnittstelle (IR) umfasst, die geeignet ist, einen Befehl eines ersten Typs zu empfangen, der von einem Mittel extern von dem Kommunikationsgerät übertragen wird, das Rechnerprogramm Instruktionen umfasst, die, wenn das Programm in dem Kommunikationsgerät ausgeführt wird, bewirken: Erteilen (S3, E3n) eines ersten Befehls des ersten Typs (EV, EVn), der die Daten (HA, KP) umfasst und für die persönliche Vorrichtung bestimmt ist, Einkapseln (S3, E3n) des ersten erteilten Befehls (EV, EVn) in einen zweiten Befehl (AT) eines zweiten Typs, Entkapseln (S4, E4n) des zweiten Befehls in den ersten erteilten Befehl in der Netzschnittstelle, und Übertragen (S4, E4n) des ersten Befehls von der Netzschnittstelle zur persönlichen Vorrichtung (EP), damit eine Aktion in der persönlichen Vorrichtung gemäß dem Befehl ausgeführt wird.

## Claims

1. Method for securing data in an item of communicating equipment (EC) associated with a personal device (EP) of chip card type, and comprising a network interface (IR) able to receive a command of a first type transmitted to the item of communicating equipment by an external means, the method comprises, in the item of communicating equipment, establishing (S3, E3n) a first command of the first type (EV, EVn) including the data (HA, KP) and intended for the personal device, encapsulating (S3, E3n) the first established command (EV, EVn) in a second command (AT) of a second type, decapsulating (S4, E4n) the second command to the first established command in the network interface, transmitting (S4, E4n) the first command from the network interface to the personal device (EP), and executing (S6, E6n) an action in the personal device as a function of the first command.

2. Method according to Claim 1, comprising, in the first command (EV, EVn), introducing (S3, E3n) an address of a cryptography means (CY) of the personal device in which the action is executed.

3. Method according to Claim 1 or 2, comprising segmenting (E2) the data (KP) into data portions (KPn), first commands (EVn) respectively including the data portions being established (E3n) and transmitted to the personal device (EP) successively.

4. Method according to any one of Claims 1 to 3, wherein said action comprises ciphering (S6) data (HA) extracted from the established command (EV).

5. Method according to any one of Claims 1 to 3, wherein said action comprises writing (E6n) data (KP) extracted from the first established command (EVn) to the memory (M_EP) of the personal device (EP).

6. Item of communicating equipment (EC) associated with a personal device (EP) of chip card type for securing data, and comprising a network interface (IR) able to receive a command of a first type transmitted to the item of communicating equipment by an external means, the item of communicating equipment comprises a means (IC) for establishing a first command of the first type (EV, EVn) including the data (HA, KP) and intended for the personal device, and a means (IC) for encapsulating the first established command (EV, EVn) in a second command (AT) of a second type, and the network interface (IR) is able to decapsulate the second command to the first established command and to transmit the first command to the personal device (EP) so that an action is executed in the personal device as a function of the first command.

7. System comprising a personal device (EP) of chip card type and an item of communicating equipment (EC) for securing data, the item of communicating equipment comprising a network interface (IR) able to receive a command of a first type transmitted to the item of communicating equipment by an external means, the item of communicating equipment comprises a means (IC) for establishing a first command of the first type (EV, EVn) including the data (HA, KP) and intended for the personal device, and a means (IC) for encapsulating the first established command (EV, EVn) in a second command (AT) of a second type, the network interface (IR) is able to decapsulate the second command to the first established command and to transmit the first command to the personal device (EP), and the personal device comprises a means (CY) for executing an action as a function of the first transmitted command.

8. Computer program able to be implemented in an item of communicating equipment (EC) associated with a personal device (EP) of chip card type for securing data, the item of communicating equipment comprising a network interface (IR) able to receive a command of a first type transmitted to the item of communicating equipment by an external means, the computer program comprises instructions which, when the program is executed in said item of communicating equipment, establish (S3, E3n) a first command of the first type (EV, EVn) including the data (HA, KP) and intended for the personal device, encapsulate (S3, E3n) the first established command (EV, EVn) in a second command (AT) of a second type, decapsulate (S4, E4n) the second command to the first established command in the network interface, and transmit (S4, E4n) the first command from the network interface to the personal device (EP) so that an action is executed in the personal device as a function of the command.
